(19)

**Europäisches Patentamt**
**European Patent Office**
**Office européen des brevets**

(11) **EP 2 257 604 B1**

(12) **EUROPEAN PATENT SPECIFICATION**

(45) Date of publication and mention
of the grant of the patent:
**01.02.2012 Bulletin 2012/05**

(51) Int Cl.:
***C09D 11/00*** (2006.01)

(21) Application number: **09721833.3**

(86) International application number:
**PCT/GB2009/050221**

(22) Date of filing: **05.03.2009**

(87) International publication number:
**WO 2009/115831 (24.09.2009 Gazette 2009/39)**

(54) **INK, PROCESS AND USE**

TINTE, VERFAHREN UND VERWENDUNG

ENCRE, PROCÉDÉ ET UTILISATION CORRESPONDANTS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **20.03.2008 GB 0805154**

(43) Date of publication of application:
**08.12.2010 Bulletin 2010/49**

(73) Proprietor: **FUJIFILM Imaging Colorants Limited
Blackley
Manchester M9 8ZS (GB)**

(72) Inventors:
• **JOSHI, Jitin
Manchester M9 8ZS (GB)**
• **LOZMAN, Owen
Manchester M9 8ZS (GB)**

• **ANNABLE, Tom
Manchester M9 8ZS (GB)**
• **O'DONNELL, John
Manchester M9 8ZS (GB)**
• **KAY, Steven
Manchester M9 8ZA (GB)**

(74) Representative: **Ellis, Gordon Lee
Fujifilm Imaging Colorants Limited
Intellectual Property Group
P.O. Box 42
Hexagon Tower
Blackley, Manchester M9 8ZS (GB)**

(56) References cited:
**WO-A-03/062331      WO-A-2006/027544
WO-A-2006/064193    US-B1- 6 794 425
US-H1- H2 113**

Printed by Jouve, 75001 PARIS (FR)

## Description

This invention relates to inks, especially ink jet printing (IJP) inks and to the process of ink jet printing.

Inks are often one of two types, depending on the type of colorant used. Dye-based inks often comprise a dye dissolved in a liquid vehicle. Pigment-based inks comprise a pigment dispersed in a liquid vehicle. Pigment-based inks tend to have better ozone-fastness and light-fastness than dye-based inks. However, because the pigment is dispersed in a liquid vehicle there is a tendency for pigment particles to agglomerate or flocculate whilst the ink is being stored and/or whilst the ink is being used (e.g. printed). Such agglomeration or flocculation before the ink has been printed onto a substrate is highly undesirable, particularly in ink jet printing inks where the printer nozzles are very small and susceptible to blockage by any oversized particulate matter. Thus, in the ink jet field a great deal of effort has been spent attempting to increase the colloidal stability of pigment dispersions and inks containing them.

It is also desirable to provide pigment-based inks which offer good durability, especially good rub-fastness, wet-fastness and highlighter pen fastness when printed onto paper, particularly onto plain paper. We have found that the human eye is very sensitive to even tiny amounts of smearing of the pigment by a highlighter pen, especially when the pigment is of a dark colour e.g. black. Highlighter pen inks vary widely in their pH and composition. Highlighter pen inks may be neutral but more commonly they are acidic or alkaline. Highlighter pen inks may contain water-miscible organic solvents and surfactants to aid wetting of the paper. Accordingly, it is difficult to provide a stable ink jet printing ink which provides prints which exhibit good wet-fastness and highlighter fastness over the range of different highlighter pen inks.

In our own studies the provision of pigment-based inks which simultaneously have good dispersion stability, good ink jet printer firing characteristics and the abovementioned highlighter fastness has proved a particularly difficult target.

PCT patent application publication WO03/062331 describes smear resistant ink jet printing inks containing a surface modified pigment, a polyurethane dispersion and water.

United states patent application publication US2004/0061753 describes water-fast ink jet printing inks containing water, a pigment, a polymer binder containing less than 25% of hydrophilic monomer by weight based on the total polymer, which is dispersible but insoluble in aqueous media, at least one surfactant and a humectant.

We have found that the abovementioned prior art documents address the problems of water-fastness and pigment dispersion stability to some extent but that further improvements are still desirable.

Accordingly, there is a need to provide inks and especially ink jet printing inks having the abovementioned advantages.

According to a first aspect of the present invention there is provided a process for printing an image on a substrate comprising applying to the substrate by means of an ink jet printer an ink comprising the components:

    i) an encapsulated pigment comprising a pigment core and a cross-linked dispersant shell;
    ii) a binder having a weight averaged molecular weight of at least 5,000 which is polyurethane; and
    iii) a liquid vehicle

wherein the polyurethane binder comprises repeat units from poly(alkylene oxide), dihydroxy alkanoic acid and isophorone diisocyanate and the binder is chemically different from the dispersant in the shell; and the weight averaged molecular weight is established by gel permeation chromatography using dimethyl formamide as the solvent.

### Definition

Where appropriate and unless otherwise stated the words "a" and "an" mean "at least one". For example "an" encapsulated pigment means "at least one" encapsulated pigment and "a" binder means "at least one" binder.

### Pigment

The pigment forming the core of the encapsulated pigment may be any colorant material which is essentially insoluble in the liquid vehicle. Preferred pigments are essentially insoluble in a variety of liquid vehicles such as water and acetone. The pigment may be inorganic (including organo metallic) or organic.

Preferred organic pigments include, for example any of the classes of pigments described in the Colour Index International, Third Edition, (1971) and subsequent revisions of, and supplements thereto, under the chapter headed "Pigments".

Examples of organic pigments are those from the azo (including disazo and condensed azo), thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes. Preferred organic pigments are phthalocyanine pigments, especially copper phthalocyanine pigments, azo pigments, indanthrone, anthanthrone, quinacridone pigments.

Preferred inorganic pigments include titanium dioxide, aluminium oxide, iron oxide, silicon dioxide and especially carbon black

Preferably, the pigment is not surface treated so as to covalently bond water-dispersing groups (e.g. carboxy and sulfo groups) to the surface of the pigment. These kinds of pigments are often referred to as self-dispersing pigments (SDPs) or surface modified pigments (SMPs) since they are dispersible in water even in the absence of dispersants. We have found that inks containing SDPs/SMPs are not sufficiently stable in against flocculation and agglomeration when mixed with the binder, component ii) as defined in the first aspect of the present invention.

In the case of carbon blacks these may be prepared in such a fashion that some of the carbon black surface has oxidized groups (e.g. carboxy and/or hydroxy groups). However, the amount of such groups is preferably not so high that the carbon black is dispersible in water without the aid of a dispersant.

Preferably the pigment is a cyan, magenta, yellow or black pigment or a mixture comprising two or more of the same.

The pigment may be a single chemical species or a mixture comprising two or more chemical species (e.g. a mixture comprising two or more different pigments).

Encapsulated pigment

We have found that binders often tend to colloidally destabilise pigment dispersions. More specifically, a binder often tends to promote pigment flocculation and agglomeration over time which can result in an undesirable reduction of the ink jet printing quality obtained from the ink. We have found that the combination of the encapsulated pigment, the binder and the liquid vehicle as defined in the first aspect of the present invention are particularly colloidally stable, this is so even when higher proportions of the binder are present.

The encapsulated pigment used in the process of the present invention may be prepared or it may be commercially obtained.

Preferably, such encapsulated pigments are prepared by cross-linking a dispersant in the presence of a pigment and a liquid medium.

The words "liquid medium" refer to the liquid components present when the encapsulated pigment is being prepared by the cross-linking reaction.

Preferred encapsulated pigments of this type are described in PCT patent publication WO 2006/064193.

Preferably, the encapsulated pigment is in the form of a dispersion, more preferably a uniform dispersion.

The encapsulated pigment preferably has an average particle size of less than 1 micron, more preferably from 50nm to 500nm and especially from 50nm to 300nm. The average particle size is preferably measured by a light scattering technique for example using a Mastersizer instrument. The average particle size is preferably a volume or z-average size.

Cross-linked dispersant shell

Preferably, the cross-linked dispersant forming the shell comprises and more preferably is a cross-linked polymer. Preferably, the cross-linked dispersant comprises and more preferably is a cross-linked polyurethane, cross-linked polyester or more preferably a cross-linked polyvinyl dispersant.

Preferably, the cross-linked polyvinyl dispersants is or comprises a cross-linked (meth)acrylate, styrenic or (meth)acrylate-co-styrenic copolymer.

The cross-linked dispersant may comprise a single cross-linked dispersant or it may comprise two or more different cross-linked dispersants

Preferably, the cross-linked dispersant contains water-dispersing groups.

Preferably, the water-dispersing groups are cationic, non-ionic and especially anionic groups.

Preferred anionic groups include phosphonic acid groups, sulfonic acid groups and especially carboxylic acid groups. The anionic groups may be in the form of the free acid, but they are more preferably in the form of a salt. Preferred salts for anionic groups are those with alkali metal ions, ammonium ions, organic amines and organic alkanolamines. Preferred salts for cationic groups are sulphate, halide ( e.g. Cl⁻, F⁻, I⁻) and especially nitrate.

As described above, it is preferable to prepare the encapsulated pigment comprising the cross-linked dispersant shell by cross-linking a dispersant in the presence of a pigment and a liquid medium.

Preferably, the dispersant comprises at least one monomer repeat unit which contains one or more carboxylic acid groups, e.g. methacrylic acid.

When the dispersant is polymeric it may be a homopolymer, but is preferably a copolymer.

Preferred copolymeric dispersants are prepared by copolymerising at least one hydrophilic and at least one hydrophobic monomer.

Hydrophilic monomers are those monomers comprising hydrophilic groups which may be ionic or non-ionic groups. The ionic groups may be cationic but are preferably anionic. Both cationic and anionic groups may be present in the dispersant to give amphoteric stabilisation. Preferred anionic groups are phenoxy, sulphonic acid, sulphuric acid, phosphonic, polyphosphoric and phosphoric acid groups which may be in the free acid or salt form as hereinbefore described. Preferred cationic groups are quaternary ammonium, benzalkonium, guanidine, biguanidine and pyridinium. The cationic groups can be in the form of a salt as hereinbefore described. Copolymeric dispersants containing one or more ionic groups are preferably prepared by copolymerising with a monomer or macromer containing one or more ionic groups. In the case of copolyvinyl dispersants preferred monomers containing anionic groups are selected from itaconic acid, maleic acid, fumaric acid, crotonic acid, more preferably methacrylic acid, acrylic acid and beta carboxy ethyl acrylate. Of these methacrylic acid is preferred. Preferred non-ionic groups are glucoside, saccharide, polypyrrolidone, polyacrylamide and especially hydroxy and poly(ethyleneoxide) groups. Preferred poly(ethyleneoxide) groups are of the formula $-(CH_2CH_2O)_nH$ or $-(CH_2CH_2O)_nC_{1-4}$-alkyl wherein n is from 3 to 200 (preferably 4 to 20). The dispersant can contain a single non-ionic group, several non-ionic groups throughout the dispersant or one or more polymeric chains containing non-ionic groups. Hydroxy groups can be incorporated by copolymerising with monomers containing one or more hydroxy groups or by copolymerising with macromers containing for example a polyvinylalcohol, a polyhydroxyl functional acrylic or a cellulose. Ethyleneoxy groups can be incorporated by copolymerising with monomers or macromers containing polyethyleneoxide chains.

Hydrophobic monomers are those monomers comprising hydrophobic groups.

Preferred hydrophobic groups are predominantly hydrocarbons, fluorocarbons, poly $C_{3-4}$-alkyleneoxy and alkyl siloxanes comprising less than three and more preferably no hydrophilic groups. The hydrophobic group is preferably a $C_3$-$C_{50}$ hydrocarbon group or propyleneoxide which can be pendant or in chain with the hydrophobic monomer.

The copolymeric dispersants are preferably random polymers (having statistically short blocks or segments) but they can comprise block or graft copolymers (having longer blocks or segments). Copolymeric dispersants may also comprise alternating copolymers (e.g. ABABABABA copolymers).

In embodiments where the copolymeric dispersant has two or more segments it is preferred that at least one segment is hydrophobic and at least one segment is hydrophilic relative to each other. When the dispersant has at least one hydrophilic and at least one hydrophobic segment the cross-linkable group(s) can be situated in the hydrophobic segment, in the hydrophilic segment or in both.

Polyvinyl dispersants may be made by any suitable means. A preferred method for making polyvinyl dispersants is free radical polymerisation of vinyl monomers, especially (meth)acrylates and vinyl monomer containing aromatic groups such as vinyl naphthalene and especially styrenic monomers. Suitable free radical polymerisation methods include, but are not limited to, suspension, emulsion, dispersion and preferably solution polymerisation. Preferably, the vinyl polymerisation is carried out in a liquid composition comprising water, a water-miscible organic solvent or a mixture of water and a water-miscible organic solvent.

Preferred polyvinyl dispersants comprise one or more (meth)acrylate monomer repeat units.

Copolyvinyl dispersants which contain the repeat units from both hydrophilic and hydrophobic monomers preferably have a random or statistical structure. Copolyvinyl dispersants can be made for example, by free radical copolymerisation methods wherein the segment length is often statistically very short or effectively non-existent. Such copolymers are often referred to as "random" copolymers. Copolyvinyl dispersants having segments can be made by copolymerisation methods such as group transfer copolymerisation, atom transfer copolymerisation, macromonomer copolymerisation, graft copolymerisation and anionic or cationic copolymerisation.

Suitable hydrophilic vinyl monomers include non-ionic and ionic vinyl monomers.

Preferred non-ionic vinyl monomers are those containing saccharide, glucoside, amide, pyrrolidone and especially hydroxy and ethoxy groups.

Preferred examples of non-ionic vinyl monomers include hydroxy ethylacrylate, hydroxy ethyl methacrylate, vinyl pyrrolidone, ethoxylated (meth)acrylates and (meth)acrylamides.

Suitable ionic vinyl monomers may be cationic but are preferably anionic.

Preferred anionic vinyl monomers are those comprising phosphonic acid groups, sulphonic acid groups and especially carboxylic acid groups which may be in the free acid form or salts thereof. Preferred examples are styrenesulfonic acid, vinylbenzylsulfonic acid, vinylsulfonic acid, acryloyloxyalkyl sulfonic acids (for example, acryloyloxymethyl sulfonic acid, acryloyloxyethyl sulfonic acid, acryloyloxypropyl sulfonic acid and acryloyloxybutyl sulfonic acid), methacryloyloxymethyl sulfonic acid, methacryloyloxyethyl sulfonic acid, methacryloyloxypropyl sulfonic acid and methacryloyloxybutyl sulfonic acid), 2-acrylamido-2-alkylalkane sulfonic acids (for example, 2-acrylamido-2-methylethanesulfonic acid, 2-acrylamido-2-methylpropanesulfonic acid and 2-acrylamido-2-methylbutane sulfonic acid), 2-methacrylamido-2-alkylalkane sulfonic acids (for example, 2-methacrylamido-2-methylethanesulfonic acid, 2-methacrylamido-2-methyl-propanesulfonic acid and 2-methacrylamido-2-methylbutanesulfonic acid), mono-(acryloyloxyalkyl)phosphates (for example, mono(acryloyloxyethyl)phosphate and mono(3-acryloyloxypropyl)phosphates) and mono(methacryloyloxyalkyl) phosphates (for example, mono(methacryloyloxyethyl)phosphate and mono(3-methacryloyloxypropyl)phosphate), acrylic acid, beta carboxy ethyl acrlylate, itaconic acid, crotonic acid and especially methacrylic acid.

Preferred cationic vinyl monomers are those comprising quaternary amine, pyridinium, guanidine and biguanidine groups.

Preferred hydrophobic vinyl monomers have no hydrophilic groups. Preferred hydrophobic vinyl monomers include $C_{1-20}$-hydrocarbyl (meth)acrylates, butadiene, styrene and vinyl naphthalene. Especially preferred are $C_{4-20}$-hydrocarbyl (meth)acrylates for example butyl (meth)acrylate, octyl (meth)acrylate, 2-ethyl hexyl (meth) acrylate, isobornyl acrylate, lauryl acrylate and stearyl acrylate. A particularly preferred hydrophobic vinyl monomer is 2-ethyl hexyl methacrylate. The hydrocarbyl groups in these hydrophobic vinyl monomers may be branched or linear.

Polyester dispersants are typically made by esterification of a dicarboxylic acid with a diol. In place of the carboxylic acid an acid chloride, anhydride or alky (typically methyl or ethyl) ester of the acid can be used. Small amounts of monofunctional and/or tri or higher functional monomers can be present in the esterification monomer mixture. Mixtures of carboxylic acids and/or alcohols can be used. Another route to the preparation of polyesters is the well known ring opening of cyclic lactones such as caprolactone. Caprolactone can be polymerised to give diols which may be used in both polyester and polyurethane synthesis.

Preferred hydrophobic monomers for making polyesters are esters, acids, acid chlorides, anhydrides, cyclic lactones and alcohols containing $C_{1-50}$-hydrocarbylene more preferably $C_{4-50}$-hydrocarbylene, and especially $C_{6-20}$-hydrocarbylene groups. These hydrocarbylene groups preferably comprise alkylene, cycloalkylene, arylene, aralkylene and/or alkarylene groups. Hydrophobic monomers preferably contain no hydrophilic groups other than those needed for the polyester copolymerisation. Other preferred hydrophobic monomers include those containing $C_{3-4}$-alkyleneoxy (especially propyleneoxy), fluorocarbons and siloxanes. Hydrophobic urethanes, polycarbonates and polyvinyls can be prepared containing carboxylic acid or hydroxy groups such that they may be incorporated into polyesters.

Preferred hydrophilic monomers for making polyesters contain hydroxy groups and/or acid groups which are unreacted, or ethyleneoxy groups. Especially preferred are polyethyleneoxy diols.

Suitable hydrophilic monomers for making polyesters comprise sulphonic acid with hydroxy and/or carboxylic acid groups, for example aromatic dicarboxylic acids having an ionised sulphonate group. Particularly preferred is sodio-5-sulphoisophthalic acid (SSIPA). Other useful monomers which have two or more groups which readily undergo an ester condensation reaction and have one or more sulphonic acid groups are dihydroxy aryl monomers having at least one sulphonic acid group.

A further method for introducing hydrophilic residues is to incorporate polyester monomers containing protected hydrophilic groups (such as silylated hydroxy groups) which are de-protected after polymerisation. The advantage of protection/de-protection is that the molecular weight and remaining acid/hydroxy functionality can be separately controlled.

Polyurethane dispersants are preferably made by the condensation of a di-isocyanate with a diol. Small amounts of monofunctional and/or tri or higher functional monomers can be present in the condensation monomer mixture. Mixtures of isocyanates and/or alcohols can be used.

Preferred hydrophobic monomers for making polyurethanes include isocyanates and alcohols comprising $C_{1-50}$-hydrocarbylene more preferably $C_{4-50}$-hydrocarbylene, and especially $C_{6-20}$-hydrocarbylene groups. Hydrocarbylene groups can comprise alkylene, cycloalkylene, arylene, aralkylene and/or alkarylene groups. Preferably, the hydrophobic monomers contain no hydrophilic group other than those needed for the urethane polymerisation. Other preferred hydrophobic monomers for making polyurethanes contain siloxane and fluorocarbon groups. Hydrophobic polycarbonates, polyesters and polyvinyls can be prepared containing isocyanate or hydroxy groups such that they can be incorporated into a polyurethane.

Examples of suitable hydrophobic isocyanates include ethylene diisocyanate, 1,6-hexamethylene diisocyanate, isophorone diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate. Mixtures of the polyisocyanates can be used, particularly isomeric mixtures of the toluene diisocyanates or isomeric mixtures of the diphenylmethane diisocyanates (or their hydrogenated derivatives), and also organic polyisocyanates which have been modified by the introduction of urethane, allophanate, urea, biuret, carbodiimide, uretonimine or isocyanurate residues.

Preferred hydrophobic alcohols contain $C_{3-4}$-alkyleneoxy (especially propyleneoxy), fluorocarbon, siloxane, polycarbonate and $C_{1-20}$-hydrocarbyl poly (meth)acrylate groups.

Preferred examples of hydrophobic diols for making polyurethanes include hexane diol, cyclohexane diol, propyleneoxy diols, diols from polycaprolactone, diols from polyvalerolactone, poly$C_{1-20}$-alkyl (meth)acrylate diols, siloxane diols, fluorocarbon diols and alkoxylated bisphenol A diols.

Preferred hydrophilic monomers for making polyurethane dispersants contain one or more groups selected from ethyleneoxy, sulphonic acid, phosphoric acid, quaternary ammonium and especially carboxylic acid groups including combinations thereof. A preferred example of a monomer containing a sulphonic acid group is bis(2-hydroxyethyl)-5-sodiosulphoisophthalate. Preferred examples of monomers containing quaternary ammonium groups are quaternary ammonium salt diols for example dimethanol diethyl ammonium bromide. The acidic and/or quaternary ammonium group may be in the form of a salt as hereinbefore described. A preferred polyurethane monomer containing an ethyleneoxy groups is polyethyleneoxide diol and especially the polyoxalkyene amines as described in EP 317,258. Polyurethane dispersants most preferably comprise dihydroxy alkanoic acid, especially a dimethylol propionic acid repeat units.

Hydrophilic groups can be introduced into polyurethanes by using excess hydroxy groups over isocyanate groups so that the resulting hydrophilic polyurethanes have unreacted hydroxy groups after polymerisation. Also, monomers containing protected hydrophilic groups such as silylated hydroxy groups can be used. Said protected groups can be de-protected after polymerisation.

The dispersant is preferably chosen to suit the liquid medium to be used in the process for preparing the encapsulated pigment and also the liquid vehicle to be used in any final intended ink in which the encapsulated pigment will be used (e.g. IJP inks). Thus, for example, when the encapsulated pigment is to be used in an aqueous ink jet printing ink the dispersant in the cross-linked dispersant shell preferably has a predominantly hydrophilic character. Similarly, when the encapsulated pigment is to be used in an oil-based (non-aqueous) ink the dispersant in the cross-linked shell preferably has a predominantly hydrophobic character.

The acid value (AV) of the cross-linked dispersant in the shell is preferably from 50 to 300 and more preferably from 75 to 200mg KOH/g of cross-linked dispersant shell.

Preferably, the dispersant has a number average molecular weight of from 500 to 100,000, more preferably from 1,000 to 50,000 and especially from 1,000 to 35,000 prior to being cross-linked around the pigment. The molecular weight is preferably measured by gel permeation chromatography ("GPC").

Preferably, the dispersant adsorbs onto the pigment prior to cross-linking so as to form a relatively stable dispersion. This dispersant is then cross-linked. The dispersant may be self cross-linking, that is to say that the dispersant itself contains all the groups needed to cross-link. More preferably, however, the dispersant is cross-linked with a cross-linking agent.

In a particularly preferred embodiment the encapsulated pigment is prepared by cross-linking a dispersant in the presence of a pigment and a liquid medium, wherein the cross-linking reaction is effected by means of an epoxy functional cross-linking agent. In this embodiment the dispersant preferably contains carboxy and/or hydroxy groups. Preferably, this embodiment is as described in PCT patent publication WO 2006/064193.

Using the same kind of dispersant it is possible, though less desirable, to use isocyanate, carbodiimide and oxazoline functional cross-linking agents to effect cross-linking.

The encapsulated pigment may be as described in United States patent 6,262,152, PCT patent publication WO 2005/056700 or WO 2005/061087.

Binder

The binder is a polyurethane.

More preferably, the binder comprises only polyurethanes and no other chemical class of binder (e.g. no polyvinyl or polyester binders). Preferably, the binder is dispersible, more preferably soluble in the liquid vehicle. More preferably, the binder is soluble in water, particularly when neutralised and adjusted to a pH of from 8 to 10. It is preferred that the binder has a solubility in water when neutralised as indicated above of at least 1% by weight. Preferably, the solubility is measured at a 20°C. When more than one binder is present in the ink it is preferred that all of the binders present in the ink are soluble in the liquid vehicle. We have found that when the binder has good solubility in the liquid vehicle the resulting inks can be printed from an ink jet printer with a much reduced tendency for the ink jet printer nozzles to become fouled or clogged over time. In addition, prints obtained from such inks have good highlighter smear resistance. This is so even for plain paper which is free from fixing agents.

When the binder is dispersible (but not soluble) it preferably has an average particle size of no more than 500nm, more preferably from 10 to 200nm. The average particle size is preferably measured by a light scattering technique or by photon correlation spectroscopy (PCS). The average particle size can be the volume or Z-average size.

The binder preferably has a weight averaged molecular weight of from 5,000 to 500,000, more preferably from 5,000 to 300,000, especially from 20,000 to 300,000 and most especially from 20,000 to 100,000. The molecular weight is measured by gel permeation chromatography (GPC). The solvent for GPC is dimethyl formamide (DMF).

Preferably, the binder is not cross-linked, more preferably the ink contains no cross-linked binder of any kind.

The binder may have a graft, star or branched structure, but is preferably linear.

The binder preferably contains cationic, non-ionic and more preferably anionic groups.

When the binder contains anionic or cationic groups these are preferably in the form of a salt. The salts are as hereinbefore described with regard to dispersants.

If desired, the binder may be purified by methods analogous to those used for colorants in ink jet printing inks. For example, a mixture of the binder and water may be purified by ion-exchange, filtration, reverse osmosis, dialysis, ultrafiltration or a combination thereof. In this way one may remove water-miscible organic solvents used in the polymerisation, low molecular weight salts, impurities and unreacted monomers.

The binder may be prepared by any suitable method.

Preferably, the binder is as described in PCT patent publication WO 2006/027544.

The binder comprises repeat units from a dihydroxy alkanoic acid, especially dimethylol propionic acid.

The binder is preferably prepared by the preparation of a polyurethane prepolymer, reacting the polyurethane prepolymer with a mono functional end capping agent to give a partially end capped polyurethane prepolymer and chain extending the partially end capped polyurethane prepolymer to give a polyurethane binder.

The polyurethane prepolymer may be obtained from the reaction of a mixture comprising the components:

i) at least one polyisocyanate; and
ii) at least one compound having at least two isocyanate-reactive groups; provided that the polyurethane binder comprises repeat units from poly(alkylene oxide), dihydroxy alkanoic and isophorone diisocyanate.

The polyurethane prepolymer may be prepared by reacting components i) and ii) in a suitable manner. Substantially anhydrous conditions are preferred. Temperatures of from 30°C and 130°C are preferred and the reaction is continued until the reaction between isocyanate groups in component i) and the isocyanate-reactive groups in component ii) is substantially complete.

The relative amounts of components i) and ii) are preferably selected such that the mole ratio of isocyanate groups to isocyanate-reactive groups is from 2:1 to 1.2:1, more preferably 1.3:1 to 2:1 and especially from 1.4:1 to 2:1. As a result the polyurethane prepolymer preferably has an NCO/OH ratio of 2:1 to 1.2:1, more preferably 1.3:1 to 2:1 and especially from 1.4:1 to 2:1.

The polyurethane prepolymer may be prepared, for example, in solvent or as a melt.

If desired a catalyst may be used to assist formation of the polyurethane prepolymer. Suitable catalysts include butyl tin dilaurate, stannous octoate and tertiary amines as known in the art.

In a preferred embodiment the process either does not use a catalyst or the process uses a metal-free catalyst. This embodiment has the advantage of avoiding contamination of the resultant polyurethane with metal from a metal-containing catalyst. Metals such as those commonly used in catalysts can adversely affect ink jet printheads, particularly the printheads used in thermal ink jet printers.

A polyisocyanate is any compound having two or more isocyanate groups, for example an aliphatic, cycloaliphatic, aromatic or araliphatic polyisocyanate. Examples of suitable polyisocyanates include ethylene diisocyanate, 1,6-hexamethylene diisocyanate, tetramethylxylene diisocyanate, 1,4-phenylene diisocyanate, 2,4-toluene diisocyanate, 2,6-toluene diisocyanate, 4,4'-diphenyl-methane diisocyanate and its hydrogenated derivative, 2,4'-diphenylmethane diisocyanate and its hydrogenated derivative, and 1,5-naphthylene diisocyanate. Mixtures of the polyisocyanates can be used, particularly isomeric mixtures of the toluene diisocyanates or isomeric mixtures of the diphenylmethane diisocyanates (or their hydrogenated derivatives), and also organic polyisocyanates which have been modified by the introduction of urethane, allophanate, urea, biuret, carbodiimide, uretonimine or isocyanurate residues.

Preferred polyisocyanates include cycloaliphatic polyisocyanates and aliphatic isocyanates, especially 1,6-hexamethylene diisocyanate or hydrogenated 4,4-diphenyl methyl diisocyanate.

The polyurethane binder must comprise repeat units from isophorone diisocyanate.

Preferably, the majority by weight of all the polyisocyanates present in component i) are di-isocyanates.

A small amount of tri- or higher- isocyanates may be included as part of component i) but this amount preferably does not exceed 5% by weight relative to the total weight of component i). In a preferred embodiment component i) consists of a mixture of 95 to 100% of one or more diisocyanates and from 0 to 5% (preferably 0%) of one or more tri- or higher- isocyanates, wherein the percentages are by weight relative to the weight of all the polyisocyanates present in component i).

With reference to component ii), isocyanate-reactive groups are capable of reacting with an isocyanate (-NCO) group in component i), preferred isocyanate-reactive groups are selected from -SH, -NH$_2$, -NH- and especially -OH. Preferably, at least 50 mole%, more preferably at least 80mole% and especially at least 90mole% of all the isocyanate-reactive groups present in component ii) are -OH groups. Most preferably all of the isocyanate-reactive groups are -OH groups.

Preferably, the majority by weight of all the isocyanate-reactive compounds present in component ii) are di-isocyanate-reactive compounds.

Isocyanate-reactive compounds having three or more isocyanate-reactive groups may be present, preferably in low levels not exceeding 5% by weight relative to the total weight of component ii). Preferably, component ii) consists of 95 to 100% of one or more di-isocyanate reactive compounds and 0 to 5% (preferably 0%) of one or more tri- or higher- isocyanate-reactive compounds, wherein the percentages are by weight relative to all the the isocyanate-reactive compounds present in component ii).

Water-dispersing groups may be present in component i) or, more preferably, component ii). Such groups can be incorporated to help make the final binder water-dissipatable. The dispersing groups provide the facility of self-dispersibility or solubility to the polyurethane binder in an aqueous ink. The water-dispersing groups may be ionic, non-ionic or a mixture of ionic and non-ionic dispersing groups. Preferred ionic water-dispersing groups include cationic quaternary ammonium groups, sulphonic acid groups and carboxylic acid groups.

The ionic water-dispersing groups may be incorporated into the polyurethane in the form of a low molecular weight polyol or polyamine bearing the appropriate ionic water-dispersing groups. The isocyanate-reactive compounds providing dispersing groups must include a dihydroxy alkanoic acid. A preferred dihydroxy alkanoic acid is 2,2-dimethylol propionic acid.

The carboxylic and sulphonic acid groups may be subsequently fully or partially neutralised with a base or compound containing a cationic charge to give a salt. If the carboxylic or sulphonic acid groups are used in combination with a non-ionic water-dispersing group, neutralisation may not be required. The conversion of any free acid groups into the corresponding salt may be effected during the preparation of the polyurethane and/or during the preparation of the final ink.

Preferably, the base used to neutralise any acid water-dispersing groups is ammonia, an amine or an alkaline metal base. Suitable amines are tertiary amines, for example triethylamine or triethanolamine. Suitable alkaline metal bases include alkaline metal hydroxides and carbonates, for example lithium hydroxide, sodium hydroxide, or potassium hydroxide. A quaternary ammonium hydroxide, for example $N^+(CH_3)_4OH^-$, can also be used. Generally a base is used which gives the required counter ion desired for the ink which is prepared from the polyurethane. For example, suitable counter ions include $Li^+$, $Na^+$, $K^+$, $NH_4^+$ and substituted ammonium salts.

The polyurethane binder must comprise repeat units from a poly(alkylene oxide).

Non-ionic water-dispersing groups may be in-chain or pendant groups. Preferably non-ionic dispersing groups are pendant polyoxyalkylene groups, more preferably polyoxyethylene groups. The non-ionic groups may be introduced into the polyurethane binder in the form of a compound bearing non-ionic dispersing groups and at least two isocyanate-reactive groups.

Preferably component ii) is a polyalkylene glycol having an number averaged molecular weight (Mn) of 500 to 3000.

The nature and amount of the water-dispersing groups in the polyurethane prepolymer influences whether a solution, dispersion, emulsion or suspension is formed on dissipation of the final water-dissipatable polyurethane. Preferably, sufficient water-dispersing groups are present in the final polyurethane binder such that the binder is soluble in water as previously described.

The partially end capped polyurethane prepolymer may be prepared by reacting the polyurethane prepolymer having isocyanate end groups with a mono functional end-capping agent, e.g. a mono hydrazide, mono thiol, mono alcohol and/or a mono amine. Preferably, a solvent comprising or consisting of tetramethyl sulphone and/or acetone is used. Temperatures of 20 to 110°C are preferred, especially 30 to 90°C. The reaction time will depend on the desired degree of end-capping.

Mono alcohols suitable for partial end capping the polyurethane prepolymer include $C_{1-6}$-mono alcohols (e.g. methanol, ethanol, propanol, butanol and hexanol) and $C_{1-6}$-alkyl ethers of glycols (e.g. ethylene, propylene or butylene glycol ethers) and glycol esters, e.g. ethylene, propylene or butylene glycol esters and especially diethylene glycol monomethyl ether and triethylene glycol monomethyl ether.

Mono amines suitable for partial end capping the polyurethane prepolymer include primary and secondary amines, especially amines having one or two $C_{1-4}$-alkyl groups (e.g. methylamine, dimethylamine, ethylamine, diethylamine, propylamine, dipropylamine, butylamine and cyclohexylamine). Mixtures of mono alcohols, mixtures of mono amines and mixtures of mono alcohols with mono amines may also be used for partial end-capping.

Partial end-capping may be achieved by reaction of the polyurethane prepolymer with less than a 100% stoichiometric amount of the mono functional end-capping agent. The percentage of end-capping is expressed on a molar basis.

Preferably, reaction of the polyurethane prepolymer with the mono alcohol and/or mono amine results in a polyurethane prepolymer which is 5 to 95% end-capped, more preferably 5 to 75% end-capped and especially 5 to 60% end-capped. In another embodiment the polyurethane prepolymer is 1 to 10% end-capped.

The extent of partial end-capping may be measured by determining the residual end-group (e.g. isocyanate) value of the polyurethane prepolymer before (B) and after end-capping (A) using the following equation :

$$\% \text{ end capping} = 100 \ X \ ((B)-(A))/(B).$$

The chain extension is preferably performed in an aqueous liquid. Temperatures of 5 to 80°C, more preferably 15 to 60°C are preferred. The time for which the chain extension is conducted depends to some extent of the Mn required for the binder.

Diamino compounds which may be used for chain-extension are preferably aliphatic, saturated, open-chain or cyclic diamines with 2 to 10 carbon atoms; e.g. cyclohexylenediamine, isophoronediamine, ethylenediamine, propylene-1,2- or - 1,3-diamine, hexamethylenediamine and 2,2,4- and/or 2,4,4-trimethylhexylene-1,6-diamine, among which the lower molecular open-chain diamines with 2 to 6 carbon atoms, in particular propylene-1,3-diamine and propylene-1,2-diamine, and isophoronediamine are preferred, or even hydrazine, the latter being preferably employed in the form of the hydrate.

If desired for chain extension there may be employed a diol instead of the diamino compound, e.g. a $C_{2-6}$-alkane diol. Examples of suitable diols include trimethylene glycol, ethanediol, 1,6-hexanediol, neopentylglycol, diethylene glycol, dipropylene glycol, 1,4-butanediol, 1,2-propylene glycol, 1,4-cyclohexanediamethylol, 1,4-cyclohexanediol, 1,4-bis(2-hydroxyethoxy) benzene, bis(2-hydroxyethyl)terephthalante, paraxylylenediol, and mixtures of two or more thereof.

Chain extension is preferably performed using hydrazine and/or a diamine as the chain extending agent.

Preferably, the polyurethane binder has an acid value >20mg KOH/g and <100mg KOH/g.

Preferably the polyurethane binder has a calculated log P value of -0.5 to +2.0. The Log P value can be calculated on the basis of weight fraction contributions from the monomer components of the polyurethane binder. Advanced Chemical Developments Labs software ACD/Log P batch is preferably used to calculate the Log P value.

The polyurethane binder comprises repeat units from poly(alkylene oxide) (especially poly(propylene oxide ), dihydroxy alkanoic acid (especially dimethylol propionic acid) and isophorone diisocyanate.

Preferably, the polyurethane binder contains from 10 to 40% by weight of repeat units from poly(alkylene oxide).

Preferably, the polyurethane binder contains from 5 to 20% by weight of repeat units from dihydroxy alkanoic acid.

Preferably, the polyurethane binder contains from 20 to 60% by weight of repeat units from isophorone diisocyanate.

The polyurethane may be branched but is preferably linear.

Taking account of the above preferences, in a preferred polyurethane binder:

(a) the end capping reaction is performed using a polyalkylene glycol monoC$_{1-4}$-alkyl ether;
(b) the chain extension is performed using a C$_{2-4}$-alkylene diamine;
(c) the polyol consists of a polypropylene glycol having an Mn of 500 to 3,000 and dimethylol propionic acid;
(d) the polyisocyanate is isophorone diisocyanate; and
(e) the final polyurethane binder, is soluble in water, has an Mw of at least 20,000, an acid value of from 20 to 100mgKOH/g of binder.

The binder is chemically different from the dispersant, for example the binder and the dispersant may both be polyurethanes, but having different chemical compositions. In one embodiment the dispersant and the binder comprise the same monomer repeat units but in different ratios. In another embodiment the dispersant and the binder differ by having at least one monomer repeat unit which is not found in both the dispersant and the binder.

More preferably, however, the dispersant is other than a polyurethane (e.g. a polyvinyl or polyester dispersant). A polyvinyl dispersant is, as mention before, most preferred.

Preferably only a small proportion of the binder adsorbs onto the encapsulated pigment. Accordingly, it is preferred that the majority of the encapsulated pigment and the binder are separated by the liquid vehicle.

Liquid vehicle

The liquid vehicle is the liquid components of the ink (e.g. an ink jet printing ink). This may be the same as, but is commonly different to the liquid medium (the liquid medium is as previously defined).

Preferably, the liquid vehicle is or comprises water. Preferably, the liquid vehicle comprises from 1 to 100%, more preferably from 50 to 100%, especially from 60 to 95% and more especially from 60 to 90% water by weight. The remainder is preferably one or more water-miscible organic liquids.

Preferred water-miscible organic liquids for inclusion into the liquid vehicle include C$_{1-6}$-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; water-miscible ethers, preferably tetrahydrofuran and dioxane; diols, preferably diols having from 2 to 12 carbon atoms, for example ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C$_{1-4}$-alkyl ethers of diols, preferably mono-C$_{1-4}$-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy) ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone.

Preferably the liquid vehicle comprises water and one or more, especially from 2 to 8, water-miscible organic liquids.

Especially preferred water-miscible organic liquids are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- $C_{1-4}$-alkyl and $C_{1-4}$-alkyl ethers of diols, more preferably mono- $C_{1-4}$-alkyl ethers of diols having 2 to 12 carbon atoms, especially 2-methoxy-2-ethoxy-2-ethoxyethanol; and glycerol.

When the liquid vehicle comprises more than one liquid said liquid vehicle may be in the form of a multi phase liquid (e.g. a liquid-liquid emulsion) but is preferably in the form of a single phase (homogeneous) liquid.

Ink

The viscosity of the ink as defined in the first aspect of the present invention is preferably less than 30mPa.s, more preferably less than 20mPa.s and especially less than 5mPa.s at a temperature of 25°C. The viscosity behaviour of the ink is preferably Newtonian.

According to a second aspect of the present invention there is provided an ink as defined in the first aspect of the present invention wherein the ink has a viscosity of less than 30mPa.s at 25°C which is Newtonian.

The inks preferably contain from 0.1 % to 10% by weight of the binder. We have found that particularly good highlighter smear resistance is obtained when the ink contains from 1 to 10% by weight, especially from 1 to 7% by weight and most especially from 2 to 5% by weight of the binder. Furthermore, we have found that the inks used in the present invention have improved storage stability and printer operability when compared with the known combinations of polyurethanes and surface modified pigments as described in PCT patent publication WO 2003/062331.

We have found that as the amount of the binder in the ink is increased, the superior colloidal stability of the inks used in the present invention becomes even more evident. For example, when the an ink as defined in the present invention contains about 3% by weight of the binder the ink is colloidally stable and ink jet prints well. In contrast, the corresponding ink wherein the encapsulated pigment is substituted with a surface modified pigment precipitates not long after formulation and cannot be ink jet printed.

A preferred ink comprises:

a) from 0.1 to 20 parts, more preferably from 1 to 10 parts of the encapsulated pigment;
b) from 1 to 10 parts, more preferably from 2 to 5 parts of the binder; and
c) from 70 to 98.9 parts, more preferably from 85 to 97 parts of the liquid vehicle;

wherein all the parts are by weight and the sum of the parts a) + b) + c) adds up to 100 parts.

The pH of the ink is preferably from 4 to 11, more preferably from 7 to 10.

Preferably, the ink is filtered or centrifuged to remove any particulate matter having a particle size of more than 1 micron in size.

Preferably the encapsulated pigment comprises less than 10%, more preferably less than 2% and especially less than 1% by weight of particles of size of greater than 1 micron in diameter.

The ink preferably, additionally comprises one or more additives selected from metal chelating agents, biocides, dyes and surfactants.

Preferably, the ink contains no pigments which are not the encapsulated pigments as hereinbefore described.

Preferably, the ink contains no component which is in a the form of a dispersion other than the encapsulated pigment.

In a preferred embodiment the ink and/or the encapsulated pigment used to prepare the ink is purified by to remove any low molecular weight species such as for examples salts. Suitable purification methods include ultrafiltration, nanofiltration, dialysis, reverse osmosis, centrifugation followed by redispersion in a pure liquid vehicle etc. Of these methods ultrafiltration is especially preferred.

When the ink is used as an ink jet printing ink, the ink preferably has a concentration of halide ions of less than 500 parts per million, more preferably less than 100 parts per million. Parts per million as used above refers to parts by weight relative to the total weight of the ink. We have found that purifying the inks to reduce the concentration of these undesirable ions reduces nozzle blockage in ink jet printing heads, particularly in thermal ink jet printers.

Substrate

The present invention can provide a substrate printed with an ink according to the second aspect of the present invention or by a process according to the first aspect of the present invention.

The substrate may be of any kind without limitation. The substrate may be such that the ink does not penetrate into the substrate. Examples of such substrates include glass, metal, ceramic and plastic substrates. Preferably, the substrate is one which has a surface which allows penetration by the ink. The substrate preferably has an outer layer which is porous or swellable.

Preferably the substrate is a textile, a polymer film coated with an ink jet receptor layer or paper.

Suitable polymer films include polyesters (especially polyethylene terephthalate), polycarbonates, polyimides, polystyrenes, polyether sulphones, cellulose diacetate and cellulose triacetate films.

Preferably the substrate is paper, more preferably plain paper.

In one embodiment the substrate contains no fixatives.

A particular advantage of the present invention is that the ink may be printed onto a substrate which has no fixatives whilst still providing good optical density and highlighter smear resistance.

Many fixing agents are cationic in nature and examples include quaternary amines, guanides, biguanides, polyamines and polyimines.

Image

The image printed on the substrate may be of any kind. The image may be in the form of text, pictures, tables, graphs, photographs, bar codes or the like including combinations thereof.

Cartridge

According to a third aspect of the present invention there is provided an ink jet printer cartridge comprising a chamber and an ink, wherein the ink is present in the chamber and the ink is as according to the second aspect of the present invention.

Printer

The present invention can provide an ink jet printer comprising an ink jet printer cartridge according to the third aspect of the present invention.

The ink jet printer may be of any kind without limitation. Preferred ink jet printers include acoustic, piezo and especially thermal ink jet printers.

Use

The present invention can provide the use of a process according to the first aspect of the present invention for preparing a printed substrate for the technical purpose of achieving improved highlighter smear resistance.

Examples

The invention is further illustrated by the following non-limiting examples wherein all parts are by weight unless expressed to the contrary.

Example 1

Preparation of Dispersant (1)

A monomer feed composition was prepared by mixing methacrylic acid (236.5 parts), methyl methacrylate (413.5 parts), 2-ethylhexyl methacrylate (350 parts) and isopropanol (375 parts). An initiator feed composition was prepared by mixing 2,2'-azobis(2-methylbutyronitrile) (22.05 parts) and isopropanol (187.5 parts).

Isopropanol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer feed and the initiator feed were both fed into the reactor over 2 hours. The reactor vessel contents were maintained at 80°C for a further 4 hours before cooling to 25°C. The resulting dispersant was then isolated from the reactor vessel contents by rotary evaporation under reduced pressure. This was designated as Dispersant (1). Dispersant (1), was an acrylic copolymer which had a number average molecular weight of 17,119 a weight average molecular weight of 30,048, a polydispersity of 1.8 (as measured by Gel Permeation Chromatography - GPC) and an acid value of 154mg KOH/g.

Preparation of Dispersant Solution (1)

Dispersant (1) was added to water, neutralised with potassium hydroxide aqueous solution and allowed to dissolve. This gave Dispersant Solution (1) having a pH of about 10 and containing approximately 20% by weight of Dispersant (1).

Mill-base (1)

A pigment (Carbon black - Nipex$^{RTM}$ 170IQ obtained from Degussa) (20 parts), was mixed with Dispersant solution (1) (41 parts) and deionized water (39 parts). The mixture was then stirred for several minutes to form a pre-dispersion. The pre-dispersion was then placed into a Labstar bead mill, along with bead milling media (0.5mm in diameter) and milled for 6 hours. The beads were then screened off and this resulted in Mill-base (1). The pigment particles in Mill-base (1) had a $D_{90}V$ average particle size of about 100nm as measured by a Mastersizer$^{RTM}$ instrument.

Preparation of Encapsulated Pigment Dispersion (1)

Mill-base (1) (20 parts) as prepared above, boric acid (0.11 parts) and water (79.4 parts) were stirred for approximately 16 hours at 25°C and formed a mixture.

Polyethylene glycol diglycidyl ether having a number averaged molecular weight of about 526 (i.e. a cross-linking agent) (0.45 parts supplied by Aldrich having the Catalogue No 47,569-6) was slowly added to the mixture at a temperature of about 25°C, the mixture was then heated and stirred for 6 hours at a temperature of 70°C. The mixture was cooled to 25°C. This resulted in the preparation of an encapsulated pigment dispersion which had a pH of about 11 and a $D_{90}V$ average particle size of about 100nm as measured by a Mastersizer$^{RTM}$ instrument. At this stage, the encapsulated pigment dispersion contained significant amounts of salts and other low molecular weight impurities.

The encapsulated pigment dispersion (as prepared above) was diluted with water until it contained 5% by weight of encapsulated pigment. The diluted encapsulated pigment dispersion was then ultrafiltered using a Sartocon Slice 200 unit fitted with a poly ethyl sulfone cassette having a pore size of 0.1 microns. Ultrafiltration was performed at a roughly constant concentration of the encapsulated pigment in the dispersion. The concentration of encapsulated pigment was kept approximately constant by periodic additions of deionized (DI) water. The periodic additions of DI water were continued until approximately 20 wash volumes of DI water had been passed through the encapsulated pigment dispersion. In this way impurities such a salts and other low molecular weight components were substantially removed from the encapsulated pigment dispersion. No further DI water was added and the ultrafilter was then used to concentrate the encapsulated pigment dispersion until it contained about 15% by weight of encapsulated pigment. This was designated Encapsulated pigment dispersion (1).

Comparative pigment dispersion (1)

A comparative carbon black pigment dispersion (CAB-O-JET™ 300) was obtained from Cabot corp. CAB-O-JET™ 300 is a carboxylic acid functional, surface modified (unencapsulated) pigment dispersed in water. The pigment content was about 15% w/w.

Preparation of Polyurethane Binder dispersion (1)

Stage 1 - Preparation of a Polyurethane Prepolymer (1)

A one litre round-bottomed reactor was fitted with a mechanical paddle stirrer, a thermocouple and a water-cooled condenser. The following steps were performed under a nitrogen blanket.

Polypropylene glycol 1000 (215.34 parts), dimethylol propionic acid (90 parts) and tetramethylene sulfone (323.08 parts) were charged to the reactor at 19-22°C, followed by isophorone diisocyanate (294.66 parts), which was added with stirring. The reaction mixture was then warmed to 95°C over about 10 minutes using an external isomantle.

At 95°C an exotherm was observed and this was controlled using an external ice bath. The reactor was then maintained at 95°C for a further two hours after which a sample was removed for isocyanate determination. The isocyanate determination was performed by a titration method to check for complete reaction by comparing the theoretical with the experimental isocyanate value (experimental value 3.8% and theoretical value 4.00%). This prepared Polyurethane Prepolymer (1).

Stage 2 - Preparation of Partially end-capped Polyurethane Prepolymer (1)

Tri (propylene glycol) mono methyl ether (an end-capping agent) (12.86 parts) was added to the reactor through a pressure equalizing dropping funnel. The reactor was then maintained at 95°C for a further 60 minutes whilst still under a nitrogen blanket. A sample was extracted for isocyanate determination using a titration method. The extent of end-capping was 7.5%. This prepared the partially end-capped polyurethane prepolymer (1).

Stage 3 - Preparation of Polyurethane binder dispersion (1)

Ethylene diamine (9.64 parts), aqueous potassium hydroxide 10% w/w (384.94 parts) and deionized water (1481.24 parts) were added to a 10 litre baffled round-bottomed reactor to form a mixture. The mixture was warmed to a temperature of 25°C.
Partially end-capped polyurethane prepolymer (1) arising from stage 2 (871.3 parts) was cooled to 75-80°C and then dispersed into the above mixture using agitation.
Agitation was maintained throughout the dispersion process and for several hours afterwards. The temperature during the dispersion of the partially end-capped polyurethane prepolymer was kept below 40°C by the use of an external ice bath. After ensuring that the pH was in the range 8 to 9, the product was filtered through a 52 micron cloth to give the desired Polyurethane binder dispersion (1) having a pH of 8.32, a solids content of 22.05%
The polyurethane binder in the dispersion comprised the residues of dimethylol propionic acid (14.44%), poly propylene glycol 1000 (34.55%), isophorone diisocyanate (47.28%), tri (propylene glycol) mono methyl ether (2.07%) and ethylene diamine (1.66%).
The polyurethane binder had a number averaged molecular weight of 36,600 and a weight averaged molecular weight of 36,600 as determined by GPC.

Ink vehicles

Ink vehicle (1) was prepared by mixing 2-pyrrolidone (10.91 parts), glycerol (54.44 parts), 1,2-hexane diol (15.55 parts), ethylene glycol (18.18 parts) and Surfynol™ 465 (1.82 parts obtained from Air Products).
Ink vehicle (2) was prepared by mixing 2-pyrrolidone (15.63 parts), ethylene glycol mono n-butyl ether (31.25 parts), diethylene glycol mono n-butyl ether (50 parts) and Surfynol™ 465 (3.13 parts).

Inks

Preparation of Inks (1)-(4)

Inks (1) to (4) were prepared by mixing the components described in Table 1. The Ink vehicle, Polyurethane binder dispersion (1) and deionized water were mixed together. This mixture was stirred whilst Encapsulated pigment dispersion (1) was added. The mixture was then placed into a sealed bottled and rolled on rollers for a period of 30 minutes.

Table 1

| Ink reference | Ink (1) | Ink (2) | Ink (3) | Ink (4) |
|---|---|---|---|---|
| | | | | |
| Ink vehicle (1) | 27.5 | 27.5 | - | - |
| Ink vehicle (2) | - | - | 32 | 32 |
| | | | | |
| Polyurethane binder dispersion (1) | 4.55 | 13.63 | 4.55 | 13.63 |
| | | | | |
| Deionized water | 36.75 | 27.65 | 32.25 | 23.15 |
| | | | | |
| Encapsulated Pigment dispersion (1) | 31.2 | 31.2 | 31.2 | 31.2 |
| Comparative Pigment dispersion (1) | - | - | - | - |

Preparation of Comparative Inks (1) - (4)

Comparative inks (1) to (4) were prepared by mixing the components described in Table 2. The Ink vehicle, Polyurethane binder dispersion (1) if present and deionized water were mixed together. This mixture was stirred whilst Encapsulated pigment dispersion (1) or Comparative Pigment dispersion (1) was added. The mixture was then placed into a sealed bottled and rolled on rollers for a period of 30 minutes.

Table 2

| Ink reference | Comparative Ink (1) | Comparative Ink (2) | Comparative Ink (3) | Comparative Ink (4) |
|---|---|---|---|---|
| | | | | |
| Ink vehicle (1) | 27.5 | 27.5 | 27.5 | 27.5 |
| Ink vehicle (2) | - | - | - | - |
| | | | | |
| Polyurethane binder dispersion (1) | - | - | 4.55 | 13.63 |
| | | | | |
| Deionized water | 41.3 | 45.83 | 41.3 | 32.2 |
| | | | | |
| Encapsulated pigment dispersion (1) | 31.2 | - | - | - |
| Comparative Pigment dispersion (1) | - | 26.68 | 26.68 | 26.68 |

Preparation of Comparative Inks (5) - (8)

Comparative inks (5) to (8) were prepared by mixing the components described in Table 3. The Ink vehicle, Polyurethane binder dispersion (1) if present and deionized water were mixed together. This mixture was stirred whilst Encapsulated pigment dispersion (1) or Comparative Pigment dispersion (1) was added. The mixture was then placed into a sealed bottled and rolled on rollers for a period of 30 minutes.

Table 3

| Ink reference | Comparative Ink (5) | Comparative Ink (6) | Comparative Ink (7) | Comparative Ink (8) |
|---|---|---|---|---|
| | | | | |
| Ink vehicle (1) | - | - | - | - |
| Ink vehicle (2) | 32 | 32 | 32 | 32 |
| | | | | |
| Polyurethane binder dispersion (1) | - | - | 4.55 | 13.63 |
| | | | | |
| Deionized water | 36.8 | 41.33 | 36.8 | 27.7 |
| | | | | |
| Encapsulated pigment dispersion (1) | 31.2 | - | - | - |
| Comparative Pigment dispersion (1) | - | 26.68 | 26.68 | 26.68 |

<u>Preparation of striped test samples</u>

The above prepared Inks and Comparative inks were applied to HP advanced IJ paper using the following method:

    i) 100 micro litres of the ink were accurately pipetted onto the surface of the paper;
    ii) the ink was then drawn down uniformly over the surface of the paper using a K-control K-bar (No 1, 6 microns wet film) this step provided a stripe of ink on the paper;
    iii) the ink was then allowed to dry on the paper for a period of 24 hours.

This prepared Test samples (1) to (4) and Comparative test samples (1) to (8). The references corresponding exactly to the Inks and Comparative inks which were deposited on the paper.

<u>Testing methods</u>

<u>Highlighter durability</u>

Highlighter durability was tested by highlighting twice across the same part of the test samples. Each of the two highlighter passes were started about 2.5cm into the striped region (where the ink or comparative ink had been applied) and was continued in a straight line to approximately 2.5cm outside the stripe (into a region in which no ink or comparative ink had been applied).
Two different kinds of highlighter pen mimics were used in the above durability tests. Each pen mimic comprised a HPLC vial filled with one of two highlighter pen inks and fitted with a 4.6mm wide fibre nib purchased from Teibow Co Ltd.
The alkaline highlighter pen mimic contained an alkaline highlighter ink which contained 20% sucrose, 0.2% Proxel$^{RTM}$ GXL and adjusted to a pH of 10.5 with NaOH, the remaining amounts required to make 100% were made up with deionized water.
The acidic highlighter pen mimic contained an acidic highlighter ink which contained 20% glycerol, 0.2% Proxel$^{RTM}$ GXL, adjusted to a pH of 5 with acetic acid, the remaining amounts required to make 100% were made up with deionized water.

<u>Wet rub durability</u>

A nitrile rubber medical examination glove was wom on the hand and the index finger of the glove was wetted with deionized water. Excess water was gently shaken off. The index finger was then used to rub the stripe starting from about 2.5cm into the stripe and continuing in a straight line to approximately 2.5cm outside the stripe. The rub was repeated three times in the same part of the stripe/paper.

<u>Measurement of durability</u>

In both the highlighter and wet-rub durability tests any pigment which moved from the initial striped region to the region where no ink or comparative ink had been applied gave rise to a darkened or smeared appearance in the region where no ink had been applied.
The amount of smearing was quantified visually wherein:

    5 = no smearing visible
    4 = slight smearing
    3 = significant smearing
    2 = extensive smearing
    1 = intense/dramatic smearing

In addition a Gretag Macbeth Spectrolino photodensitometer was used to measure the reflectance optical density (OD) of the region where smearing might appear after the durability test. The OD value used was an average of 12 measurements (4 measurements on each test, each test being performed 3 times in total). Of course, lower values for the OD correspond to less smearing and therefore better durability performance.
For all of the durability results an improvement factor was calculated by dividing the highest OD obtained in an ink of the same ink vehicle type (e.g. the glycerol or glycol ether containing inks) by the OD of the ink in question. Higher improvement factors equate to better durability.

Results

Inks and Comparative inks containing glycerol

Table 4

| Ink on the test sample | Pigment type | Amount of polyurethane binder in ink | Wet rub OD after test | Wet rub improvement factor | Wet rub visual score |
|---|---|---|---|---|---|
| Comparative Ink (1) | E | 0 | 0.1175 | 2.4 | 3 |
| Ink (1) | E | 1 | 0.1075 | 2.6 | 3 |
| Ink (2) | E | 3 | 0.0816 | 3.5 | 4 |
| Comparative Ink (2) | SM | 0 | 0.285 | 1 | 1 |
| Comparative Ink (3) | SM | 1 | 0.1738 | 1.6 | 2 |
| Comparative Ink (4) | SM | 3 | Unstable | - | - |
| SM - surface modified (i.e. CABO-JET™ 300) pigment<br>E-encapsulated pigment (i.e. Encapsulated pigment dispersion (1)) | | | | | |

Table 4, shows that the glycerol containing inks of the present invention provided a much improved wet-rub durability when compared to equivalent inks based on surface modified pigments or which do not contain the polyurethane binder. Comparative Ink (4) was unstable and could not be satisfactorily applied to the paper for testing.

Table 5

| Ink on the test sample | Pigment type | Amount of polyurethane binder in ink | Alkaline highlighter mimic OD after test | Alkaline highlighter mimic improvement factor | Alkaline highlighte r mimic visual score |
|---|---|---|---|---|---|
| Comparative Ink (1) | E | 0 | 0.077 | 2.1 | 4 |
| Ink (1) | E | 1 | 0.0729 | 2.2 | 4 |
| Ink (2) | E | 3 | 0.062 | 2.6 | 5 |
| Comparative Ink (2) | SM | 0 | 0.1613 | 1 | 2 |
| Comparative Ink (3) | SM | 1 | 0.0991 | 1.6 | 3 |
| Comparative Ink (4) | SM | 3 | Unstable | - | - |

Table 5, shows that the glycerol containing inks of the present invention provided a much improved alkaline highlighter durability when compared to equivalent inks based on surface modified pigments or which do not contain the polyurethane binder. Comparative Ink (4) was unstable and could not be satisfactorily applied to the paper for testing.

Table 6

| Ink on the test sample | Pigment type | Amount of polyurethane binder in ink | Acidic highlighter mimic OD after test | Acidic highlighter mimic improvement factor | Acidic highlighter mimic visual score |
|---|---|---|---|---|---|
| Comparative Ink (1) | E | 0 | 0.0771 | 2.1 | 4 |
| Ink (1) | E | 1 | 0.0729 | 2.2 | 4 |
| Ink (2) | E | 3 | 0.062 | 2.6 | 5 |
| Comparative Ink (2) | SM | 0 | 0.1613 | 1 | 2 |
| Comparative Ink (3) | SM | 1 | 0.0992 | 1.6 | 3 |
| Comparative Ink (4) | SM | 3 | Unstable | - | - |

Table 6, shows that the glycerol containing inks of the present invention provided a much improved acidic highlighter durability when compared to equivalent inks based on surface modified pigments or which do not contain the polyurethane binder. Comparative Ink (4) was unstable and could not be satisfactorily applied to the paper for testing.

Inks and comparative inks containing a glycol ether

Table 7

| Ink on the test sample | Pigment type | Amount of polyurethane binder in ink | Wet rub OD after test | Wet rub improvement factor | Wet rub visual score |
|---|---|---|---|---|---|
| Comparative Ink (5) | E | 0 | 0.133 | 2.2 | 3 |
| Ink (3) | E | 1 | 0.1013 | 2.9 | 4 |
| Ink (4) | E | 3 | 0.08 | 3.7 | 4 |
| Comparative Ink (6) | SM | 0 | 0.292 | 1 | 2 |
| Comparative Ink (7) | SM | 1 | 0.1971 | 1.5 | 2 |
| Comparative Ink (8) | SM | 3 | Unstable | - | - |

Table 7, shows that the glycol ether containing inks of the present invention provided a much improved wet rub durability when compared to equivalent inks based on surface modified pigments or which do not contain the polyurethane binder. Comparative Ink (8) was unstable and could not be satisfactorily applied to the paper for testing.

Table 8

| Ink on the test sample | Pigment type | Amount of polyurethane binder in ink | Alkaline highlighter mimic OD after test | Alkaline highlighter mimic improvement factor | Alkaline highlighter mimic visual score |
|---|---|---|---|---|---|
| Comparative | E | 0 | 0.084 | 2.2 | 4 |

(continued)

| Ink on the test sample | Pigment type | Amount of polyurethane binder in ink | Alkaline highlighter mimic OD after test | Alkaline highlighter mimic improvement factor | Alkaline highlighter mimic visual score |
|---|---|---|---|---|---|
| Ink (5) | | | | | |
| Ink (3) | E | 1 | 0.067 | 2.8 | 4 |
| Ink (4) | E | 3 | 0.0588 | 3.2 | 5 |
| Comparative Ink (6) | SM | 0 | 0.1883 | 1 | 2 |
| Comparative Ink (7) | SM | 1 | 0.0983 | 1.9 | 3 |
| Comparative Ink (8) | SM | 3 | Unstable | - | - |

Table 8, shows that the glycol ether containing inks of the present invention provided a much improved alkaline highlighter durability when compared to equivalent inks based on surface modified pigments or which do not contain the polyurethane binder. Comparative Ink (8) was unstable and could not be satisfactorily applied to the paper for testing.

Table 9

| Ink on the test sample | Pigment type | Amount of polyurethane binder in ink | Acidic highlighter mimic OD after test | Acidic highlighter mimic improvement factor | Acidic highlighter mimic visual score |
|---|---|---|---|---|---|
| Comparative Ink (5) | E | 0 | 0.0838 | 2.8 | 4 |
| Ink (3) | E | 1 | 0.0688 | 3.4 | 4 |
| Ink (4) | E | 3 | 0.0613 | 3.8 | 5 |
| Comparative Ink (6) | SM | 0 | 0.2308 | 1 | 2 |
| Comparative Ink (7) | SM | 1 | 0.1175 | 2.0 | 3 |
| Comparative Ink (8) | SM | 3 | Unstable | - | - |

Table 9, shows that the glycol ether containing inks of the present invention provided a much improved acidic highlighter durability when compared to equivalent inks based on surface modified pigments or which do not contain the polyurethane binder. Comparative Ink (8) was unstable and could not be satisfactorily applied to the paper for testing.
We have obtained similar results to those shown above using HP Colorlok, Xerox 4200, 4CC art and Epson Crispia IJ paper.
The above findings clearly demonstrated the improvements in wet rub, alkaline and acidic highlighter durability obtained from inks which can be used in the process according to the first aspect of the present invention. These finding were surprising because (1) we expected that encapsulated pigments might not benefit from a polyurethane binder because they already have a "binder-like" dispersant cross-linked around the pigment, (2) we did not expect that the encapsulated pigment would have a notably better stability than surface modified pigments towards the presence of polyurethane binders and (3) we did not expect that only small amounts of polyurethane binder would provide such notable improvements in durability.

**Claims**

1. A process for printing an image on a substrate comprising applying to the substrate by means of an ink jet printer an ink comprising the components:

   i) an encapsulated pigment comprising a pigment core and a cross-linked dispersant shell;
   ii) a binder having a weight averaged molecular weight of at least 5,000 which is a polyurethane; and
   iii) a liquid vehicle;

   wherein the polyurethane binder comprises repeat units from poly(alkylene oxide), dihydroxy alkanoic acid and isophorone diisocyanate and the binder is chemically different from the dispersant in the shell; and
   the weight averaged molecular weight is established by gel permeation chromatography using dimethyl formamide as the solvent.

2. A process according to claim 1 wherein the binder has a weight averaged molecular weight of from 20,000 to 300,000 wherein the weight average molecular weight is established by gel permeation chromatography using dimethyl formamide as the solvent.

3. A process according to any one of the preceding claims wherein the binder is or comprises a polyurethane prepolymer which has been partially end capped with a mono functional agent and then chain extended.

4. A process according to any one of the preceding claims wherein the binder comprises repeat units from poly (propylene oxide), dimethylol propionic acid and isophorone diisocyanate.

5. A process according to any one of the preceding claims wherein the dispersant in the shell is or comprises a cross-linked vinyl polymer.

6. A process according to any one of the preceding claims wherein the binder is soluble in water.

7. A process according to any one of the preceding claims wherein the binder is not cross-linked.

8. A process according to any one of the preceding claims wherein the ink comprises:

   a) 0.1 to 20 parts of the encapsulated pigment;
   b) 1 to 10 parts of the binder;
   c) 98.9 to 70 parts of the liquid vehicle;

   wherein the all the parts are by weight and the sum of the parts a) + b) + c) adds up to 100 parts.

9. A process according to any one of the preceding claims wherein the liquid vehicle is or comprises water.

10. An ink comprising the components:

    i) an encapsulated pigment comprising a pigment core and a cross-linked dispersant shell;
    ii) a binder having a weight averaged molecular weight of at least 5,000 which is a polyurethane; and
    iii) a liquid vehicle;

    wherein the polyurethane binder comprises repeat units from poly(alkylene oxide), dihydroxy alkanoic acid and isophorone diisocyanate, the binder is chemically different from the dispersant in the shell and the ink has a viscosity of less than 30mPa.s at 25°C which is Newtonian; and
    the weight average molecular weight is established by gel permeation chromatography using dimethyl formamide as the solvent.

11. An ink according to claim 10 in which the ink and/or the encapsulated pigment used to prepare the ink has been purified by ultrafiltration.

12. An ink according to claim 10 or 11 comprising:

a) 0.1 to 20 parts of the encapsulated pigment;
b) 1 to 10 parts of the binder; and
d) 98.9 to 70 parts of the liquid vehicle;

wherein the all the parts are by weight and the sum of the parts a) + b) + c) = 100 parts.

**13.** An ink according to any one of claims 10 to 12 wherein the dispersant shell is or comprises a cross-linked vinyl polymer.

**14.** An ink jet printing ink comprising an ink according to any one of claims 10 to 13 which additionally comprises one or more additives selected from metal chelating agents, biocides, dyes and surfactants.

**15.** An ink jet printer cartridge comprising a chamber and an ink, wherein the ink is present in the chamber and the ink is according to claim 14.

**Patentansprüche**

**1.** Verfahren zur Bebilderung eines Substrats, bei dem man darauf mit einem Tintenstrahldrucker eine Tinte, umfassend die Komponenten:

i) ein umhülltes Pigment mit einem Pigmentkern und einer Schale aus vernetztem Dispergiermittel;
ii) ein Bindemittel mit einem gewichtsmittleren Molekulargewicht von mindestens 5000, bei dem es sich um ein Polyurethan handelt; und
iii) einen flüssigen Träger;

aufbringt; wobei das Polyurethan-Bindemittel Wiederholungseinheiten von Poly(alkylenoxid), Dihydroxyalkansäure und Isophorondiisocyanat umfasst und das Bindemittel sich chemisch von dem Dispergiermittel in der Schale unterscheidet und das gewichtsmittlere Molekulargewicht durch Gelpermeationschromatographie unter Verwendung von Dimethylformamid als Lösungsmittel ermittelt wird.

**2.** Verfahren nach Anspruch 1, bei dem das Bindemittel ein gewichtsmittleres Molekulargewicht von 20.000 bis 300.000 aufweist, wobei das gewichtsmittlere Molekulargewicht durch Gelpermeationschromatographie unter Verwendung von Dimethylformamid als Lösungsmittel ermittelt wird.

**3.** Verfahren nach einem der vorhergehenden Ansprüche, bei dem das Bindemittel ein Polyurethan-Prepolymer, das teilweise mit einem monofunktionellen Agens endgruppenverschlossen und dann kettenverlängert worden ist, ist oder umfasst.

**4.** Verfahren nach einem der vorhergehenden Ansprüche, bei dem das Bindemittel Wiederholungseinheiten von Poly(propylenoxid), Dimethylolpropionsäure und Isophorondiisocyanat umfasst.

**5.** Verfahren nach einem der vorhergehenden Ansprüche, bei dem das Dispergiermittel in der Schale ein vernetztes Vinylpolymer ist oder umfasst.

**6.** Verfahren nach einem der vorhergehenden Ansprüche, bei dem das Bindemittel in Wasser löslich ist.

**7.** Verfahren nach einem der vorhergehenden Ansprüche, bei dem das Bindemittel nicht vernetzt ist.

**8.** Verfahren nach einem der vorhergehenden Ansprüche, bei dem die Tinte:

a) 0,1 bis 20 Teile des umhüllten Pigments;
b) 1 bis 10 Teile des Bindemittels;
c) 98,9 bis 70 Teile des flüssigen Trägers umfasst, wobei sich alle Teile auf das Gewicht beziehen und die Summe der Teile a) + b) + c) sich zu 100 Teilen summiert.

**9.** Verfahren nach einem der vorhergehenden Ansprüche, bei dem der flüssige Träger Wasser ist oder umfasst.

**10.** Tinte, umfassend die Komponenten:

i) ein umhülltes Pigment mit einem Pigmentkern und einer Schale aus vernetztem Dispergiermittel;

ii) ein Bindemittel mit einem gewichtsmittleren Molekulargewicht von mindestens 5000, bei dem es sich um ein Polyurethan handelt; und

iii) einen flüssigen Träger;

wobei das Polyurethan-Bindemittel Wiederholungseinheiten von Poly(alkylenoxid), Dihydroxyalkansäure und Isophorondiisocyanat umfasst, das Bindemittel sich chemisch von dem Dispergiermittel in der Schale unterscheidet und die Tinte eine Viskosität von weniger als 30 mPa.s bei 25°C, die newtonisch ist, aufweist und das gewichtsmittlere Molekulargewicht durch Gelpermeationschromatographie unter Verwerdung von Dimethylformamid als Lösungsmittel ermittelt wird.

11. Tinte nach Anspruch 10, worin die Tinte und/oder das zur Herstellung der Tinte verwendete umhüllte Pigment durch Ultrafiltration gereinigt worden sind.

12. Tinte nach Anspruch 10 oder 11, umfassend:

a) 0,1 bis 20 Teile des umhüllten Pigments;

b) 1 bis 10 Teile des Bindemittels und

c) 98,9 bis 70 Teile des flüssigen Trägers; wobei sich alle Teile auf das Gewicht beziehen und die Summe der Teile a) + b) + c) sich zu 100 Teilen summiert.

13. Tinte nach einem der Ansprüche 10 bis 12, worin die Dispergiermittelschale ein vernetztes Vinylpolymer ist oder umfasst.

14. Tintenstrahldrucktinte, umfassend eine Tinte nach einem der Ansprüche 10 bis 13, die zusätzlich ein oder mehrere unter Metallchelatbildnern, Bioziden, Farbstoffen und Tensiden ausgewählte Additive umfasst.

15. Tintenstrahldruckerpatrone mit Kammer und Tinte, wobei sich die Tinte in der Kammer befindet und Anspruch 14 entspricht.

**Revendications**

1. Procédé d'impression d'une image sur un substrat comprenant l'application au substrat, au moyen d'une imprimante à jet d'encre, d'une encre comprenant les composants suivantes :

i) un pigment encapsulé comprenant un coeur de pigment et une coquille de dispersant réticulé ;

ii) un liant ayant un poids moléculaire moyen en poids d'au moins 5000 qui est un polyuréthane ; et

iii) un véhicule liquide ;

dans lequel le liant de polyuréthane comprend des motifs répétitifs de poly(oxyde d'alkylène), d'acide dihydroxyalcanoïque et de diisocyanate d'isophorone, et le liant est chimiquement différent du dispersant dans la coquille ; et le poids moléculaire moyen en poids est établi par chromatographie par perméation de gel en utilisant du diméthylformamide comme solvant.

2. Procédé selon la revendication 1 dans lequel le liant a un poids moléculaire moyen en poids de 20 000 à 300 000, le poids moléculaire moyen en poids étant établi par chromatographie par perméation de gel en utilisant du diméthylformamide comme solvant.

3. Procédé selon l'une quelconque des revendications précédentes dans lequel le liant est ou comprend un prépolymère de polyuréthane dont les extrémités ont été partiellement coiffées avec un agent monofonctionnel puis la chaîne allongée.

4. Procédé selon l'une quelconque des revendications précédentes dans lequel le liant comprend des motifs répétitifs de poly(oxyde de propylène), d'acide diméthylolpropionique et de diisocyanate d'isophorone.

5. Procédé selon l'une quelconque des revendications précédentes dans lequel le dispersant dans la coquille est ou comprend un polymère vinylique réticulé.

**6.** Procédé selon l'une quelconque des revendications précédentes dans lequel le liant est soluble dans l'eau.

**7.** Procédé selon l'une quelconque des revendications précédentes dans lequel le liant n'est pas réticulé.

**8.** Procédé selon l'une quelconque des revendications précédentes dans lequel l'encre comprend :

a) 0,1 à 20 parties du pigment encapsulé ;
b) 1 à 10 parties du liant ; et
c) 98,9 à 70 parties du véhicule liquide ;

dans lequel toutes les parties sont en poids, et la somme des parties a)+b)+c) s'élève à 100 parties.

**9.** Procédé selon l'une quelconque des revendications précédentes dans lequel le véhicule liquide est ou comprend de l'eau.

**10.** Encre comprenant les composants suivants :

i) un pigment encapsulé comprenant un coeur de pigment et une coquille de dispersant réticulé ;
ii) un liant ayant un poids moléculaire moyen en poids d'au moins 5000 qui est un polyuréthane ; et
iii) un véhicule liquide ;

dans laquelle le liant de polyuréthane comprend des motifs répétitifs de poly(oxyde d'alkylène), d'acide dihydroxyalcanoïque et de diisocyanate d'isophorone, le liant est chimiquement différent du dispersant dans la coquille, et l'encre a une viscosité inférieure à 30 mPa.s à 25 °C qui est newtonienne ; et
le poids moléculaire moyen en poids est établi par chromatographie par perméation de gel en utilisant du diméthylformamide comme solvant.

**11.** Encre selon la revendication 10, l'encre et/ou le pigment encapsulé utilisé pour préparer l'encre ayant été purifiés par ultrafiltration.

**12.** Encre selon la revendication 10 ou 11 comprenant :

a) 0,1 à 20 parties du pigment encapsulé ;
b) 1 à 10 parties du liant ; et
c) 98,9 à 70 parties du véhicule liquide ;

dans laquelle toutes les parties sont en poids, et la somme des parties a)+b)+c) s'élève à 100 parties.

**13.** Encre selon l'une quelconque des revendications 10 à 12 dans laquelle la coquille de dispersant est ou comprend un polymère vinylique réticulé.

**14.** Encre pour impression par jet d'encre comprenant une encre l'une quelconque des revendications 10 à 13 qui comprend en outre un ou plusieurs additifs choisis parmi les chélateurs de métaux, les biocides, les colorants et les tensioactifs.

**15.** Cartouche d'imprimante à jet d'encre comprenant une chambre et une encre, dans laquelle l'encre est présente dans la chambre et l'encre est selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03062331 A
- US 20040061753 A
- WO 2006064193 A
- EP 317258 A
- US 6262152 B
- WO 2005056700 A
- WO 2005061087 A
- WO 2006027544 A
- WO 2003062331 A

### Non-patent literature cited in the description

- Colour Index International. 1971